# EUROPEAN PATENT SPECIFICATION

(11) **EP 4 290 849 B1**
(45) Date of publication and mention of the grant of the patent: **12.11.2025**
(21) Application number: 22177463.1
(22) Date of filing: 07.06.2022
(51) Int. Cl.: H04N 23/57

(54) **STEREO CAMERA MODULE**
STEREOKAMERAMODUL
MODULE D'APPAREIL PHOTOGRAPHIQUE STÉRÉOSCOPIQUE

(43) Date of publication of application: 13.12.2023
(73) Proprietor: Magna Electronics Sweden AB, 447 37 Vårgårda (SE)
(72) Inventor: LÖDIGE, Gunnar, 583 30 Linköping (SE)
(74) Representative: Müller Verweyen

(56) References cited:
- US-A1- 2016 195 799
- US-A1- 2019 285 830

## Description

The invention relates to a stereo camera module for a motor vehicle, comprising two cameras, wherein each camera comprises an image sensor and an objective, a circuit board, and a housing, wherein the image sensor and the objective of each camera are fixed to the same circuit board.

Stereo camera modules are known in the prior art and are used for autonomous driving applications and advanced driver assistance systems. In this application, the stereo camera modules are exposed to varying temperatures, while they must operate over a wide temperature range. A key factor for excellent performance of a stereo camera module is the optical alignment of the two cameras. Generally, temperature changes have a negative impact on the optical alignment due to thermal expansion and thermal drifts of various components.

From US 2015/0109422 A1 a ranging camera is known, which uses a common substrate. Said ranging camera comprises two imagers mounted on a common circuit board manufactured with high thermal stability in order to maintain the relative position of the imagers over a temperature range. Said ranging camera relies on a complex rail system in order to mechanically support and retain the circuit board.

US 2019/0285830 A1 discloses an imaging device having a substrate with a first imaging element and a second imaging element for sensing incident lights. Two lens frames for holding a first and second lens for guiding the incident light to the respective first and second imaging element are included, wherein a case is provided for holding the lens frames.

A camera device is disclosed in US 2016/0195799 A1 which includes a holding member that holds a plurality of cameras arranged side by side and the supporting member supporting the holding member, wherein multiple positioners position the holding member relative to the supporting member.

It is the object of the invention to provide a stereo camera module with a high thermal stability that is lightweight, easy to assemble and cost-effective to manufacture.

The invention solves this object with the features of the independent claims. A stereo camera module for a motor vehicle is proposed, comprising two cameras, wherein each camera comprises an image sensor and an objective, a circuit board, and a housing, wherein the image sensor and the objective of each camera are fixed to the same circuit board. It is proposed that the housing comprises at least three guide pins which extend through at least three guides, preferably exactly three guides, of the circuit board, each guide pin and each respective guide fixing the circuit board in at least one axis with respect to the housing, and the circuit board is clamped in the housing.

The guide pins of the housing and the guides in the circuit board allow for an easy assembly of the stereo camera module. The resulting fixation in at least one axis, which is preferably parallel to the plane of the circuit board, preferably enables an assembly in just one assembly direction, preferably the direction of gravity. This is beneficial for automatic assembly processes and thus very cost-effective.

The clamping allows a movement of the circuit board relative to the housing to the extent that constraining forces due to different thermal expansion of the circuit board and housing can be avoided. The clamping preferably exerts forces on the front side and back side of the circuit board so that the circuit board is retained perpendicular to its plane. Retaining forces parallel to the plane of the circuit board are limited by the clamping.

The plane of the circuit board is formed generally by the largest side face of the circuit board, wherein the plane can also be parallel to said largest side face, for example the plane may also lay in the material of the circuit board.

The proposed stereo camera module makes it possible to mount the common circuit board in a way to exploit the thermal properties of the common circuit board independently of the housing. The cameras are attached with their image sensors and their objectives to the common circuit board so that the distance of the two stereo cameras and their respective optical axes is only driven by the advantageous thermal properties of the circuit board.

In a preferred embodiment, the coefficient of thermal expansion of the housing is greater than the coefficient of thermal expansion of the circuit board.

A low coefficient of thermal expansion of the circuit board reduces the thermal effect on the distance of the two cameras of the stereo camera module which is beneficial for the performance over a wide temperature range. The circuit board is preferably made of glass fiber reinforced plastic. The housing, in particular the front panel and the back panel, is preferably made of plastic.

It is further proposed that a first guide of the circuit board is arranged between the two cameras, and a second guide and a third guide are arranged on each outer side of the two cameras. Thus, there are two guide-guide pin interfaces on both sides of each camera on the circuit board, namely one respective interface on the inner side towards the middle and one interface on the outer side. This provides a good and distributed mechanical support, so that the circuit board holding the two cameras can be safely retained without inducing mechanical stress due to temperature variations.

It is further proposed that the first guide is arranged in the middle between the two cameras. Accordingly, the distances from the guide to each camera are equal. The first guide interacting with the first guide pin preferably forms a center for the circuit board and housing. Any thermal expansion of the housing and the circuit board is preferably relative to the first guide pin and the first guide or the center. The equidistant arrangement of the guide to the cameras provides a symmetrical thermal expansion relative to the guide as a center.

In a preferred embodiment, the first guide pin and the respective guide fix the circuit board with respect to the housing in an axis through the centers of the two cameras and in the plane of the circuit board. Thereby, the circuit board is retained in the plane of the circuit board in both directions of said axis through the centers of the two cameras. Preferably, this is the only fixation of the circuit board to the housing in the above-described directions, which allows the keep the circuit board free of mechanical stress in said directions due to different thermal expansion between the circuit board and the housing.

In a further development, it is proposed that the first guide is an elongated hole or a notch which is oriented perpendicular to an axis through the centers of the two cameras. This way, the interaction of the guide and guide pin fixate the circuit board to the housing in the directions of the axis through the centers of the two cameras while providing tolerance for different thermal expansion of the housing and the circuit board in the other directions perpendicular thereto. This is also advantageous in the assembly process.

In an alternative embodiment, the first guide is a round hole. A round hole as the first guide in the circuit board enables to transfer mechanical loads to and from the guide pin in every direction in the plane of the circuit board.

Preferably, the second guide pin and the respective guide and the third guide pin and the respective guide fix the circuit board with respect to the housing in an axis perpendicular to an axis through the centers of the two cameras and in the plane of the circuit board.

In particular, in combination with the first guide pin and the first guide being the above-described elongated hole or notch, the circuit board can be retained in the housing without exercising constraining forces due to the difference in thermal expansion of the housing and the circuit board.

It is further proposed that the second guide pin and the respective guide and the third guide pin and the respective guide allow relative movement of the circuit board with respect to the housing in an axis through the centers of the two cameras.

Thereby, the housing can expand or contract independently of the circuit board in response to temperature changes. Thus, different thermal expansion of the housing and circuit board does not result in mechanical stresses in the circuit board since the circuit board is not constraint in said axis. Preferably, the circuit board is constrained or held in said axis by the first guide pin and the respective first guide which is preferably in the center of circuit board.

In a preferred embodiment, a second guide and a third guide are elongated holes and/or notches which are oriented parallel to an axis through the centers of the two cameras.

These guides preferably allow unconstrained movement along an axis, in particular along the axis through the centers of the two cameras, while movement perpendicular thereto can be constrained by the contact of the guide pin against the edges of the elongated holes and/or notches.

In a further development, it is proposed that the first guide, the second guide and the third guide are arranged on an axis through the centers of the two cameras. The arrangement on a common axis avoids thermal induces stress due to different thermal expansion of the housing and the circuit board, in particular off the common axis and in the plane of the circuit board.

In a further development, it is proposed that the housing comprises a front panel and a back panel, wherein the circuit board is clamped between the front panel and the back panel.

Therein, the front panel preferably presses onto the front side of the circuit board, where the cameras are fixed, and wherein the back panel presses onto the back side of the circuit board. The housing having a front panel and a back panel is thus a two-part housing which covers the circuit board. The circuit board is clamped in the housing preferably between the front panel and the back panel, wherein the edge of the circuit board is preferably covered by the housing, in particular by the back panel.

Preferably, the guide pins are arranged on the inner side of the front panel. Further preferably, the back panel has recesses on the inner side which correspond to the guide pins.

The two-part housing is preferably joined with screws. For example, the circuit board with both cameras can be placed in the front panel, where the guide pins position and hold the circuit board. Thereafter, the back panel can be placed on top to close the stereo camera module. The front panel and the back panel are preferably screwed together. The proposed housing enables to use fewer parts and is thus very cost-effective to produce.

In a further development, at least one elastic portion is arranged between the circuit board and the front panel and/or back panel. Nonetheless, in a preferred embodiment the elastic portion is arranged on the back panel, while the guide pins are preferably arranged on the front panel.

The elastic portion is beneficial to compensate tolerances in the housing and the circuit board and in particular to limit the clamping force exerted on the circuit board. Said limitation of the clamping force allows to retain the circuit board while still allowing relative movement in the plane of the circuit to address any thermal extraction or contraction.

The elastic portion has a lower Young's modulus than the housing and the circuit board. Thus, the elastic portion is soft in comparison to the housing and the circuit board like an elastic gasket.

Preferably, each area of the circuit board where a camera is arranged is at least partially supported by the elastic portion on all four sides.

Thus, any bending of the circuit board, for example due to clamping forces or inertia loads from the camera, can be avoided. The support of the area of the circuit board, where a camera is attached to the circuit board, can be a closed rectangle, square, circle or other shape or can be a shape having an open profile as long as all four sides are supported at least partially.

In the following the invention shall be illustrated on the basis of preferred embodiments with reference to the accompanying drawings. Therein shows:
- Fig. 1: the front side of a stereo camera module;
- Fig. 2: the back side of a stereo camera module;
- Fig. 3: the inside of a front panel of a housing;
- Fig. 4: a circuit board with two stereo cameras attached in an isometric view;
- Fig. 5: the front side of a circuit board with two stereo cameras;
- Fig. 6: the inside of a back panel of a housing;
- Fig. 7: a detail view of the back side of a stereo camera module;
- Fig. 8: a sectional view of a camera attached to a circuit board; and
- Fig. 9: another sectional view of a camera attached to a circuit board.

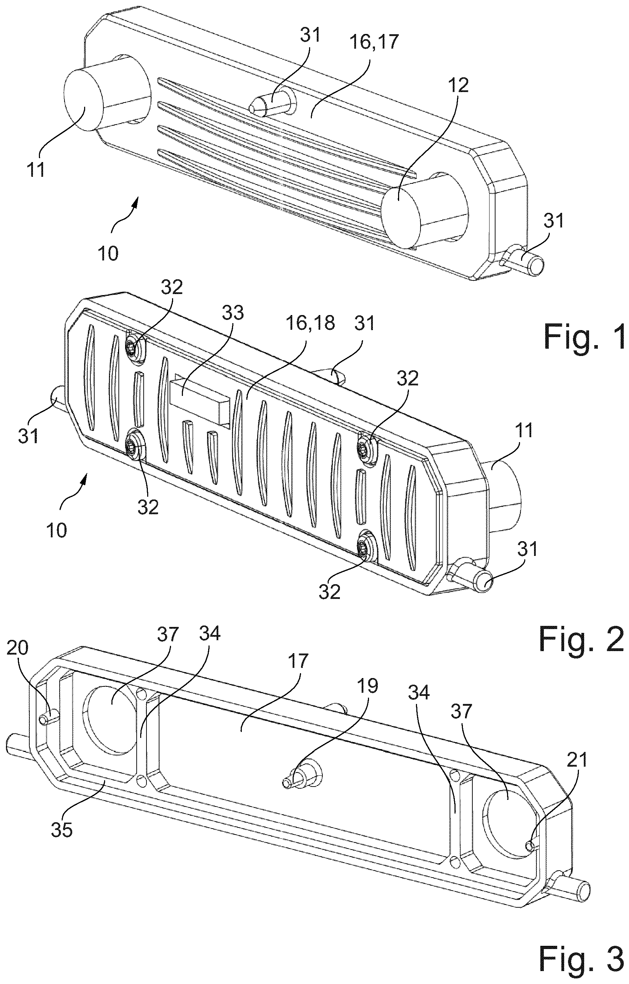

Figure 1 shows an embodiment of a stereo camera module 10 in an isometric view. The stereo camera module 10 comprises two cameras 11, 12 at a distance to each other to provide stereo vision. The stereo camera module 10 comprises a housing 16, wherein the front panel 17 of the housing 16 can be seen in Figure 1. The front panel 17 comprises mounting means 31 to mount and to align the stereo camera module 10 in a motor vehicle.

Figure 2 shows the back side of the stereo camera module 10 and the back panel 18 of the housing 16. The back panel 18 is fastened to the front panel 17 by means of screws 32 and comprises an opening for a connector 33 of the stereo camera module 10, in particular of the circuit board 15 inside the housing 16.

Figure 3 shows the inner side of the front panel 17. The front panel 17 comprises three guide pins 19, 20, 21, wherein a first guide pin 19 is arranged in the middle between the two cutouts 37 for the cameras 11, 12. A second guide pin 20 and a third guide pin 21 are arranged on the outward side of the cutouts 37. The front panel 17 comprises webs 34 on the inward side of the cutouts 37 which are on the same level as a circumferential inner edge 35 of the front panel 17. In the assembled state, the front side of the circuit board 15 abuts the circumferential inner edge 35.

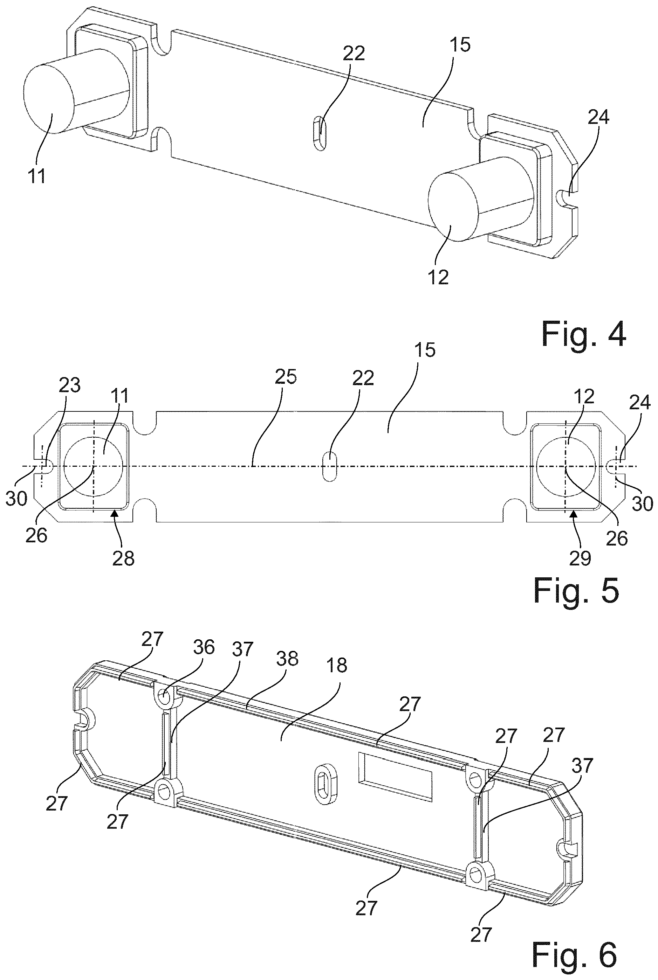

The circuit board 15 is shown in Figure 4 in an isometric view. Advantageously, the circuit board 15 is a printed circuit board (PCB). The two cameras 11, 12 are attached directly to the common circuit board 15 so that the distance between the cameras 11, 12 is defined by the mounting position on the circuit board 15. The circuit board 15 comprises the electronic components of the stereo camera module 10 like the image sensors 13 of the cameras 11, 12 and a control unit, for example. The objectives 14 are attached to the circuit board 15, carrying multiple lenses in this preferred embodiment, and the pair of stereo cameras 11, 12 is preferably provided with an active alignment.

The circuit board 15 comprises three guides 22, 23, 24 which are adapted to interact with the guide pins 19, 20, 21 of the housing 16 respectively of the front panel 17. As illustrated in Figure 5, the first guide 22 is an elongated hole in the middle between the two cameras 11, 12. The first guide 22 is also arranged in the axis 25 through the centers 26 of the cameras 11, 12, wherein the elongated hole is perpendicular to the axis 25. The second guide 23 and the third guide 24 are arranged on the outward side of the cameras 11, 12 and are formed by notches in the edge of the circuit board 15. Thus, the second and third guides 23, 24 interacting with the second and third guide pins 20, 21 do not constrain relative movement between the circuit board 15 and the housing 15 in or parallel to the axis 25. In contrast, the first guide 22 interacting with the first guide pin 19 does not constrain a relative movement between the circuit board 15 and the housing 16 perpendicular to the axis 25 and in the plane circuit board 15.

Figure 6 shows the inside of a back panel 18 of a housing 16. The back panel 18 comprises threaded holes 36 for the screws 32 and two webs 37 corresponding to the webs 34 of the front panel 17. Further, the back panel 18 comprises elastic portions 27 which are arranged on the inner side towards the circuit board 15. The elastic portions 27 transfers the clamping force from the back panel 18 to the circuit board 15 which is then clamped between the back panel 18 and the front panel 17 of the housing 16. The elastic portions 27 are formed as soft lips and are preferably permanently attached to the back panel 18, in particular on circumferential inner edge 38 and on the webs 37. The elastic portions 27 exert the clamping force and retain the circuit board 15 while still allowing small relative movements parallel to the plane of the circuit board 15 to compensate different thermal expansion of the circuit board 15 and the housing 16. The elastic portions 27 also allow the compensation of any thermal expansion or contraction in the thickness of the stereo camera module 10 or perpendicular to the plane of the circuit board 15. Thus, high clamping forces in cold conditions due to high thermal contraction, in particular the housing 16 having a higher coefficient of thermal expansion, can be avoided and certain relative movement remains even in cold condition unconstrained.

In an alternative embodiment, the elastic portions 27 are attached to the front panel 17 of the housing 16. In a further alternative embodiment, the front panel 17 and the back panel 18 have elastic portions 27 attached.

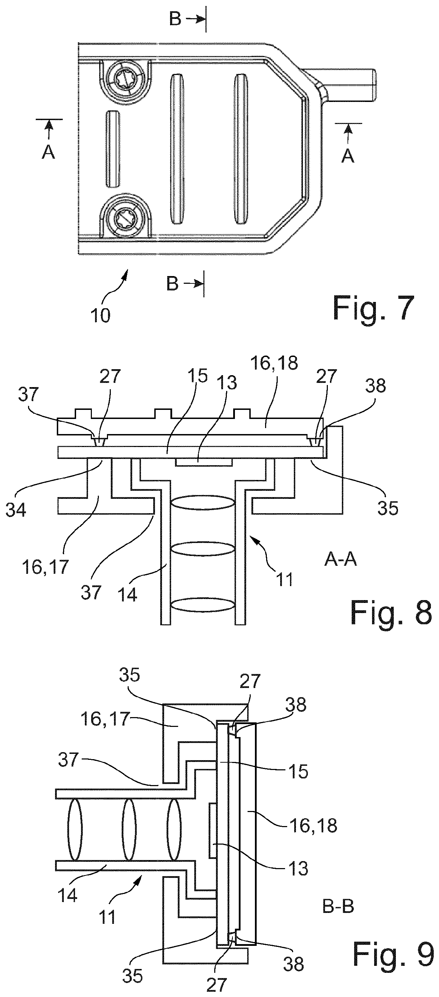

Figure 7 shows a detail view of the back side of a stereo camera module 10, where the camera 11 is arranged. The two section views A-A and B-B are shown in Figure 8 and 9.

Figure 8 and 9 illustrate the attachment of one of the two cameras 11 on the common circuit board 15. The image sensor 13 is directly attached to the circuit board 15 as well as to the objective 14. The section views of the Figure 8 and 9 show that the area of the circuit board 15, where the cameras 11, 12 are attached, are supported by the front panel 17 and the back panel 18 of the housing 16 on all four sides. The front side of the circuit board 15 is supported and therefore clamped by the circumferential inner edge 35 and the web 34 of the front panel 17. The back side of the circuit board 15 is supported by elastic portions 27 on the circumferential inner edge 38 and on the web 37 of the back panel 18. Accordingly, the area around the camera mounting position is supported and clamped at least partially on four sides to provide a rigid support.

Further, as it can be seen in Figure 8 and 9, the cutouts 37 in the front panel 17 of the housing 16 have a gap between the objective 14 and the front panel 17 to avoid any mechanical restriction over a wide temperature range.

## Claims

1. Stereo camera module (10) for a motor vehicle, comprising two cameras (11, 12), wherein each camera (11,12) comprises an image sensor (13) and an objective (14), a circuit board (15), and a housing (16), wherein the image sensor (13) and the objective (14) of each camera (11,12) are fixed to the same circuit board (15), **characterized in that** the housing (16) comprises at least three guide pins (19,20,21) which extend through at least three guides (22,23,24) of the circuit board (15), each guide pin (19,20,21) and each respective guide (22,23,24) fixing the circuit board (15) in at least one axis with respect to the housing (16), and the circuit board (15) is clamped in the housing (16).

2. Stereo camera module (10) according to claim 1, wherein a first guide (22) of the circuit board (15) is arranged between the two cameras (11,12), and a second guide (23) and a third guide (24) are arranged on each outer side of the two cameras (11,12).

3. Stereo camera module (10) according to claim 2, wherein the first guide (22) is arranged in the middle between the two cameras (11,12).

4. Stereo camera module (10) according to any one of the preceding claims, wherein the first guide pin (19) and the respective guide (22) fix the circuit board (15) with respect to the housing (16) in an axis (25) through the centers (26) of the two cameras (11,12) and in the plane of the circuit board (15).

5. Stereo camera module (10) according to any one of the preceding claims, wherein the first guide (22) is an elongated hole or a notch which is oriented perpendicular to an axis (25) through the centers (26) of the two cameras (11,12).

6. Stereo camera module (10) according to any one of the preceding claims, wherein the second guide pin (20) and the respective guide (23) and the third guide pin (21) and the respective guide (24) fix the circuit board (15) with respect to the housing (16) in an axis (30) perpendicular to an axis (25) through the centers (26) of the two cameras (11,12) and in the plane of the circuit board (15).

7. Stereo camera module (10) according to any one of the preceding claims, wherein the second guide pin (20) and the respective guide (23) and the third guide pin (21) and the respective guide (24) allow relative movement of the circuit board (15) with respect to the housing (16) in an axis (25) through the centers (26) of the two cameras (11,12).

8. Stereo camera module (10) according to any one of the preceding claims, wherein a second guide (23) and a third guide (24) are elongated holes and/or notches which are oriented parallel to an axis (25) through the centers (26) of the two cameras (11,12).

9. Stereo camera module (10) according to any one of the preceding claims, wherein the first guide (22), the second guide (23) and the third guide (24) are arranged on an axis (25) through the centers (26) of the two cameras (11,12).

10. Stereo camera module (10) according to any one of the preceding claims, wherein the housing (16) comprises a front panel (17) and a back panel (18), wherein the circuit board (15) is clamped between the front panel (17) and the back panel (18).

11. Stereo camera module (10) according to claim 10, wherein at least one elastic portion (27) is arranged between the circuit board (15) and the front panel (17) and/or back panel (18).

12. Stereo camera module (10) according to claim 11, wherein each area (28,29) of the circuit board (15), where a camera (11,12) is arranged, is supported at least partially by the elastic portion (27) on all four sides.

13. Stereo camera module (10) according to any one of the preceding claims, wherein the coefficient of thermal expansion of the housing (16) is greater than the coefficient of thermal expansion of the circuit board (15).

## Patentansprüche

1. Stereokameramodul (10) für ein Kraftfahrzeug, umfassend zwei Kameras (11, 12), wobei jede Kamera (11, 12) einen Bildsensor (13) und ein Objektiv (14), eine Schaltungsplatine (15) umfasst, und ein Gehäuse (16), wobei der Bildsensor (13) und das Objektiv (14) jeder Kamera (11, 12) auf derselben Schaltungsplatine (15) befestigt sind, **dadurch gekennzeichnet, dass** das Gehäuse (16) mindestens drei Führungsstifte (19, 20, 21) umfasst, die sich durch mindestens drei Führungen (22, 23, 24) der Schaltungsplatine (15) erstrecken, wobei jeder Führungsstift (19, 20, 21) und jede entsprechende Führung (22, 23, 24) die Schaltungsplatine (15) in mindestens einer Achse in Bezug auf das Gehäuse (16) fixieren, und die Schaltungsplatine (15) in dem Gehäuse (16) geklemmt ist.

2. Stereokameramodul (10) nach Anspruch 1, wobei eine erste Führung (22) der Schaltungsplatine (15) zwischen den beiden Kameras (11, 12) angeordnet ist und eine zweite Führung (23) und eine dritte Führung (24) jeweils an den Außenseiten der beiden Kameras (11, 12) angeordnet sind.

3. Stereokameramodul (10) nach Anspruch 2, wobei die erste Führung (22) in der Mitte zwischen den beiden Kameras (11, 12) angeordnet ist.

4. Stereokameramodul (10) nach einem der vorangehenden Ansprüche, wobei der erste Führungsstift (19) und die entsprechende Führung (22) die Schaltungsplatine (15) in Bezug auf das Gehäuse (16) in einer Achse (25) durch die Mittelpunkte (26) der beiden Kameras (11, 12) und in der Ebene der Schaltungsplatine (15) fixieren.

5. Stereokameramodul (10) nach einem der vorangehenden Ansprüche, wobei die erste Führung (22) ein Langloch oder eine Kerbe ist, die senkrecht zu einer Achse (25) durch die Mittelpunkte (26) der beiden Kameras (11, 12) ausgerichtet ist.

6. Stereokameramodul (10) nach einem der vorangehenden Ansprüche, wobei der zweite Führungsstift (20) und die entsprechende Führung (23) und der dritte Führungsstift (21) und die entsprechende Führung (24) die Schaltungsplatine (15) in Bezug auf das Gehäuse (16) in einer Achse (30) senkrecht zu einer Achse (25) durch die Mittelpunkte (26) der beiden Kameras (11, 12) und in der Ebene der Schaltungsplatine (15) fixieren.

7. Stereokameramodul (10) nach einem der vorangehenden Ansprüche, wobei der zweite Führungsstift (20) und die entsprechende Führung (23) und der dritte Führungsstift (21) und die entsprechende Führung (24) eine Relativbewegung der Schaltungsplatine (15) in Bezug auf das Gehäuse (16) in einer Achse (25) durch die Mittelpunkte (26) der beiden Kameras (11, 12) ermöglichen.

8. Stereokameramodul (10) nach einem der vorangehenden Ansprüche, wobei eine zweite Führung (23) und eine dritte Führung (24) Langlöcher und/oder Kerbe sind, die parallel zu einer Achse (25) durch die Mittelpunkte (26) der beiden Kameras (11, 12) ausgerichtet sind.

9. Stereokameramodul (10) nach einem der vorangehenden Ansprüche, wobei die erste Führung (22), die zweite Führung (23) und die dritte Führung (24) auf einer Achse (25) durch die Mittelpunkte (26) der beiden Kameras (11, 12) angeordnet sind.

10. Stereokameramodul (10) nach einem der vorangehenden Ansprüche, wobei das Gehäuse (16) eine Frontabdeckung (17) und eine Rückabdeckung (18) umfasst, wobei die Schaltungsplatine (15) zwischen der Frontabdeckung (17) und der Rückabdeckung (18) festgeklemmt ist.

11. Stereokameramodul (10) nach Anspruch 10, wobei zwischen der Schaltungsplatine (15) und der Frontabdeckung (17) und/oder der Rückabdeckung (18) mindestens ein elastischer Teil (27) angeordnet ist.

12. Stereokameramodul (10) nach Anspruch 11, wobei jeder Bereich (28, 29) der Schaltungsplatine (15), in dem eine Kamera (11, 12) angeordnet ist, zumindest teilweise durch den elastischen Teil (27) an allen vier Seiten abgestützt ist.

13. Stereokameramodul (10) nach einem der vorangehenden Ansprüche, wobei der Wärmeausdehnungskoeffizient des Gehäuses (16) größer ist als der Wärmeausdehnungskoeffizient der Schaltungsplatine (15).

## Revendications

1. Module de caméra stéréo (10) pour un véhicule automobile, comprenant deux caméras (11, 12), dans lequel chaque caméra (11, 12) comprend un capteur d'image (13) et un objectif (14), une carte de circuit imprimé (15), et un boîtier (16), dans lequel le capteur d'image (13) et l'objectif (14) de chaque caméra (11, 12) sont fixés à la même carte de circuit imprimé (15), **caractérisé en ce que** le boîtier (16) comprend au moins trois broches de guidage (19, 20, 21) qui s'étendent à travers au moins trois guides (22, 23, 24) de la carte de circuit imprimé (15), chaque broche de guidage (19, 20, 21) et chaque guide respectif (22, 23, 24) fixant la carte de circuit imprimé (15) dans au moins un axe par rapport au boîtier (16), et la carte de circuit imprimé (15) est serrée dans le boîtier (16).

2. Module de caméra stéréo (10) selon la revendication 1, dans lequel un premier guide (22) de la carte de circuit imprimé (15) est disposé entre les deux caméras (11, 12), et un deuxième guide (23) et un troisième guide (24) sont disposés sur chaque côté extérieur des deux caméras (11, 12).

3. Module de caméra stéréo (10) selon la revendication 2, dans lequel le premier guide (22) est disposé au milieu entre les deux caméras (11,12).

4. Module de caméra stéréo (10) selon l'une quelconque des revendications précédentes, dans lequel la première broche de guidage (19) et le guide respectif (22) fixent la carte de circuit imprimé (15) par rapport au boîtier (16) dans un axe (25) passant par les centres (26) des deux caméras (11, 12) et dans le plan de la carte de circuit imprimé (15).

5. Module de caméra stéréo (10) selon l'une quelconque des revendications précédentes, dans lequel le premier guide (22) est un trou allongé ou une encoche qui est orienté(e) perpendiculairement à un axe (25) passant par les centres (26) des deux caméras (11,12).

6. Module de caméra stéréo (10) selon l'une quelconque des revendications précédentes, dans lequel la deuxième broche de guidage (20) et le guide respectif (23) et la troisième broche de guidage (21) et le guide respectif (24) fixent la carte de circuit imprimé (15) par rapport au boîtier (16) dans un axe (30) perpendiculaire à un axe (25) passant par les centres (26) des deux caméras (11,12) et dans le plan de la carte de circuit imprimé (15).

7. Module de caméra stéréo (10) selon l'une quelconque des revendications précédentes, dans lequel la deuxième broche de guidage (20) et le guide respectif (23) et la troisième broche de guidage (21) et le guide respectif (24) permettent un mouvement relatif de la carte de circuit imprimé (15) par rapport au boîtier (16) dans un axe (25) passant par les centres (26) des deux caméras (11,12).

8. Module de caméra stéréo (10) selon l'une quelconque des revendications précédentes, dans lequel un deuxième guide (23) et un troisième guide (24) sont des trous allongés et/ou des encoches qui sont orienté(e)s parallèlement à un axe (25) passant par les centres (26) des deux caméras (11,12).

9. Module de caméra stéréo (10) selon l'une quelconque des revendications précédentes, dans lequel le premier guide (22), le deuxième guide (23) et le troisième guide (24) sont disposés sur un axe (25) passant par les centres (26) des deux caméras (11,12).

10. Module de caméra stéréo (10) selon l'une quelconque des revendications précédentes, dans lequel le boîtier (16) comprend un panneau avant (17) et un panneau arrière (18), dans lequel la carte de circuit imprimé (15) est serrée entre le panneau avant (17) et le panneau arrière (18).

11. Module de caméra stéréo (10) selon la revendication 10, dans lequel au moins une partie élastique (27) est disposée entre la carte de circuit imprimé (15) et le panneau avant (17) et/ou le panneau arrière (18).

12. Module de caméra stéréo (10) selon la revendication 11, dans lequel chaque zone (28, 29) de la carte de circuit imprimé (15), où une caméra (11, 12) est disposée, est supportée au moins partiellement par la partie élastique (27) sur les quatre côtés.

13. Module de caméra stéréo (10) selon l'une quelconque des revendications précédentes, dans lequel le coefficient de dilatation thermique du boîtier (16) est supérieur au coefficient de dilatation thermique de la carte de circuit imprimé (15).
